Europäisches Patentamt

European Patent Office

Office européen des brevets

(11) Veröffentlichungsnummer : **0 431 078 B1**

(12) **EUROPÄISCHE PATENTSCHRIFT**

(45) Veröffentlichungstag der Patentschrift :
**09.12.92 Patentblatt 92/50**

(51) Int. Cl.⁵ : **C01B 17/04, B01D 53/36**

(21) Anmeldenummer : **89910849.2**

(22) Anmeldetag : **28.08.89**

(86) Internationale Anmeldenummer :
**PCT/EP89/01008**

(87) Internationale Veröffentlichungsnummer :
**WO 90/02096 08.03.90 Gazette 90/06**

(54) **VERFAHREN ZUR KATALYTISCHEN OXIDATION VON SCHWEFELWASSERSTOFF.**

(30) Priorität : **29.08.88 DE 3829254**

(43) Veröffentlichungstag der Anmeldung :
**12.06.91 Patentblatt 91/24**

(45) Bekanntmachung des Hinweises auf die
Patenterteilung :
**09.12.92 Patentblatt 92/50**

(84) Benannte Vertragsstaaten :
**AT BE CH DE FR GB IT LI LU NL SE**

(56) Entgegenhaltungen :
**DE-A- 2 430 909**
**DE-A- 3 526 706**
**FR-A- 2 297 810**
**FR-A- 2 538 716**
**GB-A- 769 995**

(73) Patentinhaber : **Linde Aktiengesellschaft**
**Abraham-Lincoln-Strasse 21**
**W-6200 Wiesbaden (DE)**

(72) Erfinder : **HEISEL, Michael**
**Gistlstrasse 54**
**W-8023 Pullach (DE)**
Erfinder : **MAROLD, Freimut**
**Gottfried-Keller-Strasse 24**
**W-8024 Ottobrunn (DE)**

(74) Vertreter : **Schaefer, Gerhard, Dr.**
**Linde Aktiengesellschaft Zentrale**
**Patentabteilung**
**W-8023 Höllriegelskreuth (DE)**

## Beschreibung

Die Erfindung betrifft ein Verfahren zur katalytischen Oxidation von in einem Gasstrom enthaltenem Schwefelwasserstoff mit einem sauerstoffhaltigen Gas zu elementarem Schwefel in mit Katalysator versehenen Reaktoren.

Die Schwefelrückgewinnung aus Schwefelwasserstoff enthaltenden Gasen, wie beispielsweise Erdgasen, Gasen der partiellen Oxidation und anderen Synthesegasen, ist bislang in Claus-Anlagen realisiert, deren Verfahren auf einer katalytischen Umsetzung von Schwefelwasserstoff und Schwefeldioxid nach der Reaktionsgleichung:

$$2H_2S + SO_2 \rightleftarrows 3S + 2H_2O$$

beruht.

Um eine möglichst vollständige Umsetzung des Schwefelwasserstoffs zugewährleisten, können dem Gas sauerstoffhaltige Gase, z.B. Luft, zugemischt werden, wodurch die $SO_2$-Bildung gefördert wird. Das entstehende $SO_2$ wird nachfolgend ausgewaschen und in die Claus-Anlage zurückgeführt.

Problematisch bei dieser Verfahrensweise ist, daß die Sauerstoffzufuhr nicht zu hoch sein darf, damit die Oxidation nur bis zum $SO_2$ führt, nicht aber zu $SO_3$. Darüber hinaus ist hier ein Katalysator erforderlich, der unempfindlich gegenüber dem entstehenden Wasser wie gegenüber $SO_2$ ist. Eine weitere Notwendigkeit besteht in der Kontrolle der Reaktionstemperatur, um die Zerstörung des Katalysators zu verhindern. Höhere Temperaturen fördern außerdem den Rückumsatz von Schwefel mit Wasser zu $SO_2$ und $H_2S$, was einem Ausbeuteverlust an Schwefel gleichkommt.

Ein Katalysator und ein Verfahren, das diese Probleme bewältigt, ist auf der ACHEMA 1988, 5. bis 11. Juni, in Frankfurt am Main unter dem Titel "The Superclaus Process Increases Sulphur Recovery" vorgestellt worden. Bei diesem bekannten Verfahren findet ein Katalysator Verwendung, der den Umsatz von $H_2S$ und $O_2$ fördert, nach der Gleichung

$$2H_2S + O_2 \rightarrow 2S + 2H_2O.$$

Die Selektivität für die Bildung von Schwefel ist so hoch, daß es selbst bei Sauerstoffüberschuß mit diesem bekannten Katalysator nur zu einer geringen $SO_2$-Bildung kommt.

Weiterhin verhindert der Katalysator den Rückumsatz von Schwefel mit Wasser zu $H_2S$ und $SO_2$.

Gegenüber anderen Gaskomponenten als $H_2S$, wie $H_2$, COS, $CS_2$, CO und Kohlenwasserstoffen verhält sich der Katalysator inert, d.h. diese werden nicht oxidiert. Ist eine Schwefelgewinnung aus anderen Schwefelverbindungen als $H_2S$ vorgesehen, ist es daher zweckmäßig, diese vor oder hinter dem Superclaus-Prozeß umzusetzen.

Der Katalysator zeichnet sich ergänzend durch chemische und thermische Stabilität aus und ist gegenüber dem gebildeten Wasser unempfindlich.

Die Verwendung des bekannten Katalysators im bekannten Verfahren erfolgt dergestalt, daß das Schwefelwasserstoff enthaltende Gas mit einem sauerstoffhaltigen Gas vermischt und über den Katalysator geleitet wird. Um einen nahezu vollständigen Umsatz von $H_2S$ mit $O_2$ zu erzielen, wird der Katalysator im oxidierten Bereich, d.h. mit $O_2$-Überschuß im $H_2S/O_2$-Gasgemisch, betrieben.

Dieses Vorgehen hat jedoch schwerwiegende Nachteile. So ist der $O_2$-Überschuß der Umsetzung von $H_2S$ zwar förderlich, doch ist die stattfindende Reaktion stark exotherm, was bei höheren $H_2S$-Konzentrationen zu einer extremen Aufheizung des Katalysators führt. Eine extreme Aufheizung wiederum bewirkt die Bildung von $SO_2$, dessen Rückumsatz zu Schwefel aufgrund der Selektivität des Katalysators weitestgehend verhindert wird.

Das geschilderte bekannte Verfahren ist damit lediglich für relativ geringe $H_2S$-Konzentrationen, bis max. 2 Vol.% im zu entschwefelnden Gasstrom wirkungsvoll einsetzbar.

Der Erfindung lag damit die Aufgabe zugrunde, das bekannte Verfahren derart zu verbessern, daß Gasströme mit höherer $H_2S$-Konzentration als bislang möglich verarbeitbar sind.

Erfindungsgemäß wird dazu das sauerstoffhaltige Gas dem Reaktor zugeführt und der schwefelwasserstoffhaltige Gasstrom in Teilströme zerlegt, von denen ein Teil dem sauerstoffhaltigen Gas vor dem Reaktor und der restliche Teil an einer oder mehreren Stellen im Reaktor zugemischt wird

Anders als bei der herkömmlichen Methode wird nicht der gesamte schwefelwasserstoffhaltige Gasstrom vermischt mit sauerstoffhaltigen Gas der katalytischen Oxidation zugeführt, sondern Teilströme des Schwefelwasserstoff enthaltenden Gasstromes gebildet. Diese werden schrittweise mit dem sauerstoffhaltigen Gas verdünnt und zur Reaktion gebracht. Dazu wird der erste schwefelwasserstoffhaltige Teilstrom zusammen mit dem sauerstoffhaltigen Gas dem katalysatorgefüllten Reaktor eingespeist, die Zumischung der übrigen Teilströme erfolgt entlang der Strömungsrichtung der Reaktion, wobei der mit dem Schwefelwasserstoff des letzten Teilstromes reagierende Sauerstoff dem am Eingang des Reaktors eingespeisten sauerstoffhaltigen Gas entstammt, ohne daß eine weitere Zuspeisung an anderer Stelle vorgenommen wird. Mit der erfindungsgemäßen Maßnahme erfolgt eine wirksame Kontrolle, der bei der katalytischen Oxidation freiwerdenen Wärme, da stets nur in dem Maße Reaktionswärme freigesetzt wird, wie sie durch im Reaktor befindliche Kühlflächen, oder andere Maßnahmen, die eine Gasabkühlung bewirken, wieder abgeführt werden kann, so daß keine Temperaturspitzen auftreten können, welche zu einer Zerstörung des Katalysators oder zur Bildung von $SO_2$ führen.

In Weiterbildung der Erfindung erfolgt die Zumischung des Schwefelwasserstoff enthaltenden Gasstroms in den Reaktor in reaktionsfreien Reaktorzonen.

Diese Art der Zumischung hat den Vorteil, daß sich das sauerstoffhaltige Gas mit dem Schwefelwasserstoff enthaltenden Gasstrom homogen vermischen kann, bevor die katalytische Oxidation am Katalysator einsetzt. Erfindungsgemäß ist dazu der Reaktor in Schichten von sich abwechselnden katalysatorfreien und katalysatorbefrachteten Zonen aufgebaut. Bei den reaktionsfreien Reaktorzonen kann es sich beispielsweise um Schichten inaktiven Materials handeln, die alternierend zu den Katalysatorzonen angeordnet sind. Ebenso sind darunter Mischkammern in Form bloßer Zwischenräume zwischen den einzelnen Katalysatorschichten zu verstehen. Diese reaktionsfreien Zonen dienen lediglich der Vermischung beider Gase.

Diese erfindungsgemäße Abwandlung hat wiederum den Vorteil, daß lokale Temperaturspitzen vermieden werden, da nicht sofort am Ort der Zumischung von Schwefelwasserstoff enthaltendem Gasstrom zu sauerstoffhaltigem Gas, also bei relativ hoher örtlicher Schwefelwasserstoffkonzentration, die Reaktion einsetzen kann.

In Ausgestaltung der Erfindung erfolgt die Zumischung von Schwefelwasserstoff enthaltendem Gasstrom zu sauerstoffhaltigem Gas derart, daß die Reaktionstemperatur unterhalb der Temperatur liegt, bei der die $SO_2$-Bildung einsetzt.

Die Zumischung von Schwefelwasserstoff enthaltendem Gas wird erfindungsgemäß so dosiert, daß die $H_2S$-Konzentration im zur Reaktion kommenden $H_2S/O_2$-Gasgemisch nicht zu einer unzulässig hohen Temperatur im Katalysator führt. Eine zu hohe Temperatur fördert bekanntlich den Rückumsatz von Schwefel und Wasser zu $H_2S$ und $SO_2$, wobei letzteres bei Verwendung des Superclaus-Katalysators nicht mehr abgebaut werden kann.

Je nach der umzusetzenden $H_2S$-konzentration im Schwefelwasserstoff enthaltenden Gasstrom kann die Zahl der Zumischungen sowie das Volumen des sauerstoffhaltigen Gases entsprechend den Anforderungen angeglichen werden.

Weiterbildend wird außerdem vorgeschlagen, daß die Reaktionstemperatur unter 400 °C, vorzugsweise unter 300 °C, gehalten wird.

Erfindungsgemäß ist daher vorgesehen, die Reaktion in einem innengekühlten Reaktor durchzuführen.

Die Kontrolle der Temperatur des Reaktors kann jedoch ebenso durch Wärmetransport mittels geeigneter Wärmeträger erfolgen. Beispielsweise kann umgesetztes Gasgemisch oder Wasserdampf dafür eingesetzt werden.

Der innengekühlte Reaktor ist von Vorteil bei der Verwendung zur katalytischen Oxidation von Schwefelwasserstoff enthaltenden Gasströmen mit schwankender $H_2S$-Konzentration.

Der Reaktor zur Durchführung des erfindungsgemäßen Verfahrens besteht beispielsweise aus einem zylindrischen Gehäuse mit einer Zuleitung für sauerstoffhaltiges Gas und einer Ableitung für den umgesetzten Gasstrom. Er ist gefüllt mit einem Katalysator zur katalytischen Oxidation von Schwefelwasserstoff. In Höhe der Katalysatorschüttung befinden sich Zuleitungen für den umzusetzenden Schwefelwasserstoff enthaltenden Gasstrom.

Die Schüttung ist alternierend aus Katalysator und inaktivem Material aufgebaut, wobei die Zuleitungen in das inaktive Material münden.

Ergänzend ist der Reaktor mit einem, von einem Kühlmedium durchflossenen, Wärmetauscher in der Schüttung zu deren Kühlung versehen.

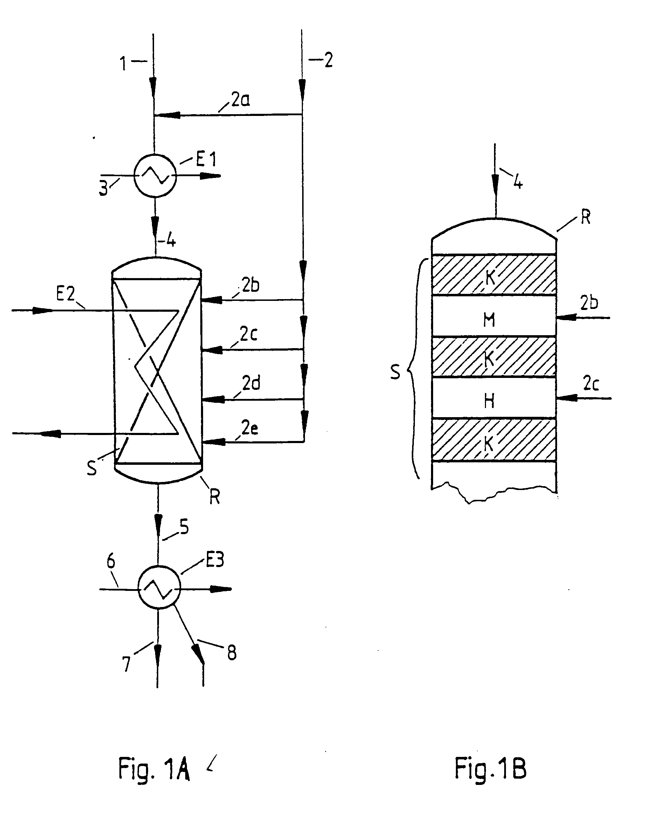

Im folgenden wird das erfindungsgemäße Verfahren beispielhaft anhand der Figuren 1A und 1B beschrieben.

In Figur 1A wird ein sauerstoffhaltiges Gas, wie beispielsweise Luft oder sauerstoffangereicherte Luft oder $O_2$ über Leitung 1 herangeführt und mit dem Teilstrom 2a des Schwefelwasserstoff enthaltenden Gasstroms der Leitung 2 vermischt. Das Gasgemisch wird in Wärmetauscher E1 gegen Wasserdampf 3 in indirektem Wärmetausch auf die Anspringtemperatur der Reaktion angewärmt und über Leitung 4 dem Reaktor zugespeist. Der Reaktor R ist mit einer Schüttung S eines Katalysators zur katalytischen Oxidation befüllt, an der die Umsetzung von $H_2S$ mit $O_2$ zu Schwefel und Wasser stattfindet. Entlang der Schüttung befinden sich weitere Zuspeisungen von Schwefelwasserstoff enthaltenden Gasströmen 2b, 2c, 2d, 2e, welche Teilströme des Gesamtstromes der Leitung 2 sind. Die Zuspeisung erfolgt dabei an Stellen, an denen die reaktion des vorherigen Gasgemisches bereits weitgehend abgeklungen ist. Mit dem noch vorhandenen Sauerstoff springt die Reaktion wieder an. Weiterer Sauerstoff über den Anteil aus Leitung 1 hinaus wird nicht zugeführt. Die bei der Reaktion entstehende Wärme, welche einen unerwünschten Temperaturanstieg der Schüttung zur Folge hat, wird durch das Kühlmedium in Wärmetauscher E2 abtransportiert. Aus dem Reaktor tritt durch Leitung 5 das umgesetzt Gas aus. Der bei der Abkühlung dieses Stromes gegen Wasserdampf 6 in Wärmetauscher E3 anfallende Schwefelstrom wird über Leitung 8 abgezogen. Das entschwefelte Restgas in Leitung 7 kann einem Verbrennungsofen zugeführt werden.

Figur 1B zeigt die erfindungsgemäße Ausgestaltung, in welcher die Schüttung S des Reaktors R aus alternierenden Bereichen mit Katalysator K und inaktivem Material M oder Mischkammern H besteht. In diesem Fall erfolgt die Zumischung der Schwefelwasserstoff enthaltenden Gasströme (2b, 2c) an den Stellen des inaktiven Materials der Mischkammern, um vor Ingangsetzung einer Reaktion eine vorherige Durchmischung der Gase zu ermöglichen. Der Wärmetauscher zur Innenkühlung des Reaktors wurde hier der besseren Übersichtlichkeit halber weggelassen.

Die nachstehende Tabelle zeigt ein zahlenmäßiges Beispiel zur Verfahrensführung nach Figur 1A. Die Stoffangaben beziehen sich dabei auf Mol-%.

| | 1 | 2 | 7 | 8 |
|---|---|---|---|---|
| $O_2$ | 20.97 | – | 0.07 | – |
| $N_2$ | 79.03 | 0.02 | 9.33 | – |
| $CO_2$ | – | 81.61 | 73.95 | 0.04 |
| $C_mH_n$ | – | 6.42 | 5.81 | – |
| $H_2S$ | – | 5.33 | 0.03 | – |
| $H_2O$ | – | 6.62 | 10.79 | 0.01 |
| $S_x$ | – | – | 0.02 | 99.95 |
| V/kmol/h | 14.76 | 113.48 | 125.26 | 0.73 |
| p/bar | 1.75 | 1.44 | 1.19 | 1.00 |
| T/C° | 92.22 | 200.00 | 150.00 | 150.00 |
| M/kg/kmol | 28.85 | 40.16 | 38.29 | 256.40 |

$(C_mH_n$ : Kohlenwasserstoffe,
$S_x$ : Schwefelpolymere $S_1 \ldots S_8)$

## Patentansprüche

1. Verfahren zur katalytischen Oxidation von in einem Gasstrom enthaltenem Schwefelwasserstoff mit einem sauerstoffhaltigen Gas zu elementarem Schwefel in mit Katalysator versehenen Reaktoren, dadurch gekennzeichnet, daß das sauerstoffhaltige Gas dem Reaktor zugeführt und der Schwefelwasserstoff enthaltende Gasstrom in Teilströme zerlegt wird, von denen ein Teil dem sauerstoffhaltigen Gas vor, dem Reaktor und der restliche Teil an einer oder mehreren Stellen im Reaktor zugemischt wird.

2. Verfahren nach Anspruch 1, dadurch gekennzeichnet, daß die Zumischung des Schhwefelwasserstoff enthaltenden Gasstroms in den Reaktor in reaktionsfreie Reaktorzonen erfolgt.

3. Verfahren nach den Ansprüchen 1 oder 2, dadurch gekennzeichnet, daß die Reaktionstemperatur unterhalb der Temperatur liegt bei der die $SO_2$-Bildung einsetzt.

**4.** Verfahren nach den Ansprüchen 1 bis 3, dadurch gekennzeichnet, daß die Reaktionstemperatur unter 400 °C, vorzugsweise unter 300 °C, gehalten wird.

**5.** Verfahren nach den Ansprüchen 1 bis 4, dadurch gekennzeichnet, daß die Reaktion in einem innengekühlten Reaktor durchgeführt wird.

## Claims

**1.** A process for the catalytic oxidation of hydrogen sulphide, contained in a gas stream, with a gas containing oxygen to form elemental sulphur in reactors provided with a catalyst, characterised in that the gas containing oxygen is supplied to the reactor and the gas stream containing hydrogen sulphide is split into substreams, of which one part is admixed with the gas containing oxygen upstream of the reactor, and the remaining part at one or more locations in the reactor.

**2.** A process as claimed in Claim 1, characterised in that the admixing of the gas containing hydrogen sulphide in the reactor takes place in reaction-free reactor zones.

**3.** A process as claimed in Claims 1 or 2, characterised in that the reaction temperature is below the temperature at which the $SO_2$-formation commences.

**4.** A process as claimed in Claims 1 to 3, characterised in that the reaction temperature is maintained below 400C, preferably below 300C.

**5.** A process as claimed in Claims 1 to 4, characterised in that the reaction is carried out in an internally cooled reactor.

## Revendications

**1.** Procédé d'oxydation catalytique de $H_2S$ contenu dans un courant gazeux à l'aide d'un gaz contenant de l'oxygène, en soufre élémentaire, dans un réacteur garni de catalyseur, caractérisé en ce que le gaz contenant de l'oxygène alimente le réacteur et en ce que le courant gazeux contenant l'$H_2S$ est fractionné en courants partiels, dont une partie est mélangé avec le gaz contenant de l'oxygène avant le réacteur et dont la partie restante est mélangée dans le réacteur en un ou plusieurs endroits.

**2.** Le procédé selon la revendication 1, caractérisé en ce que le mélange du courant gazeux contenant l'$H_2S$ dans le réacteur a lieu dans des zones non-réactionnelles du réacteur.

**3.** Le procédé selon l'une quelconque des revendications 1 ou 2, caractérisé en ce que la température de réaction est inférieure à la température de formation du $SO_2$.

**4.** Le procédé selon l'une quelconque des revendications 1 à 3, caractérisé en ce que la température de réaction est maintenue à une valeur inférieure à 400°C, de préférence inférieure à 300°C.

**5.** Le procédé selon l'une quelconque des revendications 1 à 4, caractérisé en ce que la réaction est mise en oeuvre dans un réacteur à refroidissement par échangeur interne.

Fig. 1A

Fig.1B